# EUROPÄISCHE PATENTSCHRIFT

(11) **EP 2 002 143 B1**
(45) Veröffentlichungstag und Bekanntmachung des Hinweises auf die Patenterteilung: **11.11.2009**
(21) Anmeldenummer: 07727334.0
(22) Anmeldetag: 26.03.2007
(51) Int. Cl.: F16D 65/18, F16D 65/56

(54) **ELEKTROMECHANISCHE SELBSTVERSTÄRKENDE REIBUNGSBREMSE**
ELECTROMECHANICAL SELF-ENERGIZING FRICTION BRAKE
FREIN ELETROMECANIQUE A FRICTION ET A AUTO-AMPLIFICATION

(30) Priorität: 28.03.2006 DE 102006014250
(43) Veröffentlichungstag der Anmeldung: 17.12.2008
(73) Patentinhaber: ROBERT BOSCH GMBH, 70442 Stuttgart (DE)
(72) Erfinder: BAUMANN, Dietmar, 71282 Hemmingen (DE)
(86) Internationale Anmeldenummer: PCT/EP2007/052861
(87) Internationale Veröffentlichungsnummer: WO 2007/110404

(56) Entgegenhaltungen:
- DE-A1- 2 052 496
- DE-A1- 10 218 825
- DE-A1- 10 261 455
- US-A1- 2005 121 267

## Beschreibung

### Stand der Technik

Die Erfindung betrifft eine elektromechanische selbstverstärkende Reibungsbremse mit den Merkmalen des Oberbegriffs des Anspruchs 1.

So eine Bremse geht z.B. aus DE-A-102 61 455 hervor.

Eine derartige Reibungsbremse in Bauform einer Scheibenbremse ist bekannt aus der WO 02/40 887 A1. Die bekannte Reibungsbremse ist als Fahrzeugbremse zum Bremsen eines Fahrzeugrades vorgesehen. Sie weist eine elektromechanische Betätigungseinrichtung auf, mit der zur Betätigung der Reibungsbremse ein Reibbremsbelag gegen eine Bremsscheibe drückbar ist, die dadurch gebremst wird. Die Bremsscheibe kann allgemein als Bremskörper bezeichnet werden, im Falle einer Trommelbremse ist der Bremskörper eine Bremstrommel. Die elektromechanische Betätigungseinrichtung der bekannten Reibungsbremse weist einen Elektromotor und ein Schraubgetriebe in Form eines Kugelgewindetriebs zur Umsetzung der Rotationsbewegung des Elektromotors in eine Translationsbewegung zum Drücken des Reibbremsbelags gegen die Bremsscheibe auf. Es kommen auch andere Rotations-/Translations-Umsetzungsgetriebe in Betracht. Dem Elektromotor und dem Rotations-/Translations-Getriebe kann ein Untersetzungsgetriebe zwischengeschaltet sein. Auch Linearantriebe mit beispielsweise einem Elektromagneten oder einem Piezoelement sind als elektromechanische Betätigungseinrichtung zum Drücken des Reibbremsbelags gegen die Bremsscheibe möglich, sie erübrigen Getriebe.

Zur Verstärkung einer Bremskraft weist die bekannte Reibungsbremse eine Selbstverstärkungseinrichtung auf, die eine vom drehenden Bremskörper auf den zum Bremsen gegen ihn gedrückten Reibbremsbelag ausgeübte Reibungskraft in eine Andruckkraft wandelt, die den Reibbremsbelag zusätzlich zu einer von der Betätigungseinrichtung aufgebrachten Andruckkraft gegen den Bremskörper drückt und dadurch die Bremskraft der Reibungsbremse erhöht.

Die bekannte Selbstverstärkungseinrichtung weist einen Keilmechanismus mit einer oder mehreren Keilflächen auf, die den Reibbremsbelag in einem Winkel schräg zur Bremsscheibe abstützen. Die beim Bremsen von der drehenden Bremsscheibe auf den gegen sie gedrückten Reibbremsbelag ausgeübte Reibungskraft beaufschlagt den Reibbremsbelag in einen enger werdenden Keilspalt zwischen der Keilfläche und der Bremsscheibe. Die Abstützung des Reibbremsbelag an der schräg zur Bremsscheibe verlaufenden Keilfläche bewirkt eine Stützkraft senkrecht zur Keilfläche, die eine Komponente senkrecht zur Bremsscheibe aufweist. Diese Kraftkomponente senkrecht zur Bremsscheibe ist die zusätzliche Andruckkraft, die den Reibbremsbelag zusätzlich zu der von der Betätigungseinrichtung ausgeübten Andruckkraft gegen die Bremsscheibe drückt.

Die bekannte Reibungsbremse weist einen Doppelrampenmechanismus mit in beiden Drehrichtungen der Bremsscheibe ansteigenden Keilflächen auf, so dass die Selbstverstärkung in beiden Drehrichtungen der Bremsscheibe wirksam ist. Die Keilwinkel können für beide Drehrichtungen der Bremsscheibe gleich oder verschieden sein, in letzterem Fall ist die Selbstverstärkung unterschiedlich hoch.

Auch ist ein Rampenmechanismus anstelle eines Keilmechanismus möglich, der im Unterschied zu einem Keilmechanismus eine sich ändernde Rampensteigung aufweist. Mit einem großen Rampenwinkel am Anfang der Verschiebung des Reibbremsbelags lässt sich eine schnelle Zustellung des Reibbremsbelags zur Bremsscheibe zu Beginn der Bremsbetätigung erreichen. Ein kleiner Rampenwinkel am Ende der Verschiebung des Reibbremsbelags führt zu einer hohen Selbstverstärkung bei großer Bremskraft. Der Keilmechanismus ist ein Sonderfall des Rampenmechanismus mit über den Verlauf der Rampen- bzw. Keilfläche konstantem Rampen- bzw. Keilwinkel.

Beim Rampen- und Keilmechanismus handelt es sich um mechanische Selbstverstärkungseinrichtungen. Andere mechanische Selbstverstärkungseinrichtungen mit beispielsweise einem Hebelmechanismus, die einen schräg zur Bremsscheibe stehenden, auf Zug oder auf Druck beanspruchten Hebel aufweisen, der den Reibbremsbelag beim Bremsen abstützt, sind ebenfalls bekannt. Ein Stützwinkel, unter dem der Hebel den Reibbremsbelag zur Bremsscheibe abstützt entspricht dem Keil- oder Rampenwinkel. Es handelt sich um mechanische Äquivalente. Auch andere, beispielsweise hydraulische Selbstverstärkungseinrichtungen, sind bekannt und möglich.

### Offenbarung der Erfindung

Die erfindungsgemäße Reibungsbremse mit den Merkmalen des Anspruchs 1 weist eine lösbare Abstützung für den Reibbremsbelag auf, die in nicht gelöstem Zustand den Reibbremsbelag gegen eine Reaktionskraft zur Andruckkraft abstützt und die nach einem Lösen nachgibt. Die Abstützung kann den Reibbremsbelag unmittelbar oder mittelbar abstützen, sie kann beispielsweise auch auf einer dem Reibbremsbelag gegenüberliegenden Seite der Bremsscheibe in beispielsweise einem schwimmend gelagerten Bremssattel angeordnet sein. Ist die Abstützung nicht gelöst, stützt sich der Reibbremsbelag mittelbar oder unmittelbar über die Abstützung wie üblich in beispielsweise einem Bremssattel ab. Ist die Abstützung gelöst, verliert der Reibbremsbelag seine Abstützung und die Reibungsbremse löst sich. Eine Betätigung der Reibungsbremse bei gelöster Abstützung ist nicht oder nur eingeschränkt möglich.

### Vorteile der Erfindung

Die Erfindung hat den Vorteil, dass ein Lösen der Reibungsbremse bei Ausfall der Betätigungseinrichtung oder auch der Energieversorgung durch Lösen der Abstützung möglich ist. Je nach Ausführung der erfindungsgemäßen Reibungsbremse löst sie sich bei Ausfall der Energieversorgung von selbst. Wichtig ist die Lösbarkeit der Reibungsbremse, wenn die Reibungsbremse selbsthemmend wirkt, auch wenn die Selbsthemmung nur bei großem Reibwert auftritt. Selbsthemmung der Reibungsbremse tritt auf, wenn die Selbstverstärkung so groß ist, dass die Bremskraft bei betätigter Reibungsbremse von selbst ansteigen und zu einem Blockieren der Reibungsbremse führen würde, wenn der Reibbremsbelag nicht von der Betätigungseinrichtung rückgehalten wird. Ein Verringern der Bremskraft und ein Lösen der Reibungsbremse ist in diesem Fall nur mit der Betätigungseinrichtung möglich, die den Reibbremsbelag in Löserichtung beaufschlagt. Ein Blockieren der Reibungsbremse lässt sich durch Lösen der Abstützung vermeiden und die Bremse lässt sich auch bei Ausfall der Betätigungseinrichtung lösen. Das ermöglicht einen Betrieb bzw. eine konstruktive Auslegung der Reibungsbremse und ihrer Selbstverstärkungseinrichtung zumindest teilweise im selbsthemmenden Bereich. Das ermöglicht eine hohe Selbstverstärkung, wodurch eine Betätigungskraft und Betätigungsenergie niedrig sind. Außer dem verringerten Energiebedarf hat das den Vorteil der Verwendbarkeit einer vergleichsweise leichten und kleinbauenden Betätigungseinrichtung.

Die Unteransprüche haben vorteilhafte Ausgestaltungen und Weiterbildungen der im Anspruch 1 angegebenen Erfindung zum Gegenstand.

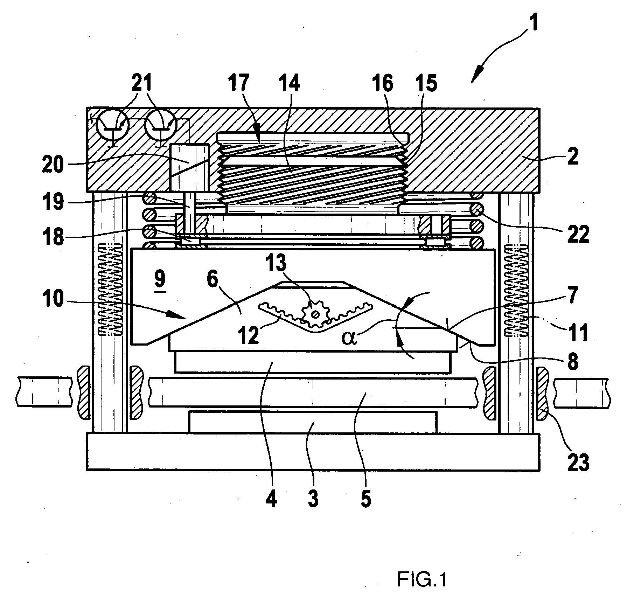

### Kurze Beschreibung der Zeichnung

Die Erfindung wird nachfolgend anhand eines in der Zeichnung dargestellten Ausführungsbeispiels näher erläutert. Die einzige Figur zeigt eine erfindungsgemäße Reibungsbremse. Die Zeichnung ist als schematisierte und vereinfachte Darstellung zur Erläuterung der Erfindung zu verstehen.

### Ausführungsform der Erfindung

Die in der Zeichnung dargestellte erfindungsgemäße Reibungsbremse ist eine Scheibenbremse 1 mit einem Bremssattel 2, in dem zwei Reibbremsbeläge 3, 4 beiderseits einer Bremsscheibe 5 angeordnet sind. Einer der beiden Reibbremsbeläge 3 liegt unbeweglich im Bremssattel 2 ein, er wird nachfolgend als fester Reibbremsbelag 3 bezeichnet. Der andere Reibbremsbelag 4 weist einen Keilkörper 6 auf einer der Bremsscheibe 5 abgewandten Rückseite auf. Der Keilkörper 6 weist zwei Keilflächen 7 auf seiner der Bremsscheibe 5 abgewandten Rückseite auf, die in entgegengesetzten Richtungen geneigt sind. Über die Keilflächen 7 stützt sich der Reibbremsbelag 4 an korrespondierenden Schrägflächen 8 eines Widerlagers 9 ab. Die Keilflächen 7 und die Schrägflächen 8 verlaufen schräg in einem Keilwinkel α zur Bremsscheibe 5. Der Reibbremsbelag 4 ist entlang der Schrägflächen 8 verschieblich geführt, d. h. der Reibbremsbelag 4 ist auf einer gedachten schraubenlinienförmigen Bahn im Keilwinkel α zur Bremsscheibe 5 verschieblich, wobei eine gedachte Achse der schraubenlinienförmigen Bahn mit einer Drehachse der Bremsscheibe 5 übereinstimmt. Zur Betätigung wird der Reibbremsbelag 4 in Drehrichtung der Bremsscheibe 5 verschoben und stützt sich dabei an einer der beiden Schrägflächen 8 ab. Bei umgekehrter Drehrichtung der Bremsscheibe 5 stützt sich der Reibbremsbelag 4 an der anderen Schrägfläche 8 ab. Die Keilwinkel α der beiden Keilflächen 7 und Schrägflächen 8 können gleich oder unterschiedlich sein.

Zur Betätigung der Scheibenbremse 1 wird der Reibbremsbelag 4 wie bereits gesagt entlang einer der beiden Schrägflächen 8 verschoben, so dass er in Anlage an die Bremsscheibe 5 kommt. Er wird weiter verschoben, wodurch sich der Bremssattel 2 quer zur Bremsscheibe 5 verschiebt, so dass auch der gegenüberliegende feste Reibbremsbelag 3 gegen die Bremsscheibe 5 gedrückt und diese gebremst wird. Der Bremssattel 2 ist in symbolisch dargestellten Lagerungen 23 quer zur Bremsscheibe 5 verschieblich, dies wird auch als schwimmende Lagerung bezeichnet. Die beiden gegen die Bremsscheibe 5 gedrückten Reibbremsbeläge 3, 4 bremsen die Bremsscheibe 5. Die drehende Bremsscheibe 5 übt eine Reibungskraft auf die gegen sie gedrückten Reibbremsbeläge 3, 4 aus, die den verschieblichen, nachfolgend als beweglichen bezeichneten Reibbremsbelag 4 in Richtung eines enger werdenden Keilspalts zwischen der Schrägfläche 8 und der Bremsscheibe 5 beaufschlagt. Die Abstützung des Reibbremsbelags 4 über seinen Keilkörper 6 an der Schrägfläche 8 bewirkt eine Abstützkraft, die eine Komponente quer zur Bremsscheibe 5 aufweist. Diese Kraftkomponente quer zur Bremsscheibe 5 drückt den Reibbremsbelag 4 zusätzlich zu einer von einer noch zu erläuternden Betätigungseinrichtung aufgebrachten Andruckkraft gegen die Bremsscheibe 5, wodurch die Bremskraft erhöht wird. Der Keilkörper 6 mit den Keilflächen 7 und das Widerlager 9 mit den Schrägflächen 8 bilden eine Selbstverstärkungseinrichtung 10 der Scheibenbremse 1, die eine bei betätigter Scheibenbremse 1 von der drehenden Bremsscheibe 5 auf den beweglichen Reibbremsbelag 4 ausgeübte Reibungskraft in eine Andruckkraft wandelt, die die Bremskraft der Scheibenbremse 1 verstärkt. Die Selbstverstärkungseinrichtung 10 weist den beschriebenen Doppelkeilmechanismus auf, der in beiden Drehrichtungen der Bremsscheibe 5 wirksam ist.

Der Keilkörper 6 kann an den Schrägflächen 8 wälzgelagert sein, im dargestellten Ausführungsbeispiel ist er gleitgelagert.

Eine Elastizität des Bremssattels 2 und ggf. weiterer Teile der Scheibenbremse 1 wie beispielsweise der Reibbremsbeläge 3, 4 ist in der Zeichnung durch die Federsymbole 11 angedeutet.

Die Betätigungseinrichtung der Scheibenbremse 1 ist elektromechanisch, sie weist eine Zahnstange 12 am Keilkörper 6 auf, die zwei Abschnitte aufweist, die jeweils parallel zu einer der beiden Keilflächen 7 bzw. Schrägflächen 8 verlaufen. In der Mitte ist die Zahnstange 12 abgewinkelt oder gekrümmt. Mit der Zahnstange 12 kämmt ein Zahnrad 13, das drehbar am Bremssattel 2 gelagert ist und das mit einem nicht dargestellten Elektromotor über ein ebenfalls nicht dargestelltes Zahnrad-Untersetzungsgetriebe antreibbar ist. Durch drehenden Antrieb des Zahnrads 13 wird der Keilkörper 6 und mit ihm der bewegliche Reibbremsbelag 4 in vorstehend erläuterter Weise verschoben und die Scheibenbremse 1 dadurch betätigt.

Über einen Stützkörper 14, der auf einer der Bremsscheibe 5 abgewandten Rückseite des Widerlagers 9 angeordnet ist, stützt sich der bewegliche Reibbremsbelag 4 über den Keilkörper 6 und das Widerlager 9 im Bremssattel 2 ab. Der Stützkörper 14 ist ein rotationssymmetrisches Teil mit einem Außengewinde 15, das in ein Innengewinde 16 des Bremssattels 2 eingeschraubt ist. Eine Gewindesteigung ist so groß gewählt, dass die Gewinde 15, 16 nicht selbsthemmend sind. Die Abstützung des Widerlagers 9 am Stützkörper 14 erfolgt über ein Axial-Kegelrollenlager 18, so dass der Stützkörper 14 leichtgängig drehbar ist. Der Stützkörper 14 bildet eine Abstützung 17 für den beweglichen Reibbremsbelag 4, die aufgrund der nicht selbsthemmenden Gewinde 15, 16 selbsttätig lösend ausgebildet ist. Ein Arretierstift 19, der in eine Bohrung im Außenbereich des Stützkörpers 14 eingreift, hält den Stützkörper 14 drehfest, so dass er den beweglichen Reibbremsbelag 4 bei einer Betätigung der Scheibenbremse 1 im Bremssattel 2 abstützt. Der Arretierstift 19 wird von einem Elektromagneten 20 in der Bohrung des Stützkörpers 14 gehalten, bei stromlosem Elektromagneten 20 zieht ein in der Zeichnung nicht sichtbares Federelement den Arretierbolzen 19 aus dem Stützkörper 14 heraus, so dass der Stützkörper 14 frei drehbar ist und sich die Abstützung 17 selbsttätig löst. Die Abstützung 17 und mit ihr die Scheibenbremse 1 ist dadurch immer lösbar, auch bei einem Ausfall der Betätigungseinrichtung 12, 13 der Scheibenbremse 1 oder einem Ausfall der Energieversorgung. Der Elektromagnet 20 weist zwei in Reihe geschaltete Schalter, beispielsweise Transistoren 21 auf, um ein Lösen auch bei einem Kurzschluss des Schalters sicherzustellen. Eine ungewollte Betätigung des Elektromagneten 20 lässt sich so verhindern.

Ein Federelement 22 in Form einer Schraubendruckfeder stützt sich im Bremssattel 2 ab und beaufschlagt das Widerlager 9 in Richtung der Bremsscheibe 5. Das als Schraubendruckfeder ausgebildete Federelement 22 umschließt den Stützkörper 14. Es bewirkt eine selbsttätige Zustellung der Abstützung 17 bei nicht betätigter Scheibenbremse 1 und durch Rückziehen des Arretierstifts 19 gelöster Abstützung 17. Nach einem Lösen der Abstützung 17 durch Rückziehen des Arretierstifts 19 gibt die Abstützung 17 nach, d. h. sie stützt den beweglichen Reibbremsbelag 4 nicht mehr gegen die Andruckkraft an die Bremsscheibe 5 ab, so dass die Scheibenbremse 1 gelöst ist.

Der Stützkörper 14 weist auf einem gedachten Kreis angeordnete Löcher für den Eingriff des Arretierstifts 19 auf, so dass der Stützkörper 14 in kurzen Drehwinkelschritten feststellbar ist. Die Feststellung des Stützkörpers 14 mittels des in das Loch eingreifenden Arretierstifts 19 ist formschlüssig. Es ist auch eine kraft- bzw. reibschlüssige und stufenlose Feststellung des Stützkörpers 14 möglich (nicht dargestellt).

Zur Einstellung eines Lüftspiels der Scheibenbremse 1 wird die Abstützung 17 durch Herausziehen des Arretierstifts 19 aus dem Stützkörper 14 durch stromlosen Elektromagneten 20 gelöst. Das Federelement 22 bewegt das Widerlager 9 in Richtung zur Bremsscheibe 5, so dass der Reibbremsbelag 4 an der Bremsscheibe 5 anliegt. Mit der Betätigungseinrichtung 12, 13 wird der Reibbremsbelag 4 so weit verschoben, wie es einem gewünschten Lüftspiel, also einem Spalt zwischen dem Reibbremsbelag 4 und der Bremsscheibe 5 entspricht. Der Reibbremsbelag 4 kann auch vor einem Lösen der Abstützung 17 verschoben werden. Durch Bestromen des Elektromagneten 20 wird die Abstützung 17 festgestellt und der Reibbremsbelag 4 wird in seine Ausgangsstellung zurück verschoben, wobei sich das gewünschte Lüftspiel einstellt. Auf diese Weise wird eine Verschleißnachstellung erreicht. Die Einstellung des Lüftspiels kann prinzipiell bei drehender Bremsscheibe 5 erfolgen, vorzugsweise erfolgt sie bei stillstehender Bremsscheibe 5, d. h. bei Stillstand eines mit der Scheibenbremse 1 ausgerüsteten Fahrzeugs. Die Einstellung des Lüftspiels kann beispielsweise immer bei Einschalten einer Zündung des Fahrzeugs vorgenommen werden.

Der Keilwinkel α der dargestellten und beschriebenen Ausführungsform der erfindungsgemäßen Scheibenbremse 1 ist so spitz gewählt, dass Selbsthemmung der Scheibenbremse 1 auftritt. Das gilt jedenfalls für einen Teil des Bereichs des Reibwerts µ zwischen dem Reibbremsbelag 4 und der Bremsscheibe 5, der in der Praxis auftreten kann. Vorzugsweise gilt es für den größeren oder den gesamten Bereich des Reibwerts µ, weil die notwendige Betätigungskraft und Betätigungsenergie der Scheibenbremse 1 dadurch geringer ist. Die Scheibenbremse 1 ist für einen negativen Bremsenkennwert C* oder für einen Bremsenkennwert C* im Bereich einer Polstelle, an der der Bremsenkennwert C* sein Vorzeichen wechselt, ausgelegt. Der Bremsenkennwert C* ist das Verhältnis zwischen Umfangskraft an der Bremsscheibe 5 und Betätigungskraft zum Verschieben bzw. Halten des beweglichen Reibbremsbelags 4. Bei selbsthemmendem Betrieb würde die Selbstverstärkung der Scheibenbremse 1 die Bremskraft bis zum Blockieren der Bremsscheibe 5 anwachsen lassen, der Reibbremsbelag 4 muss bei einer gewünschten Bremskraft gegen Weiterbewegung mit der Bremsscheibe 5 von der Betätigungseinrichtung rückgehalten werden. Zur Verringerung der Bremskraft muss der Reibbremsbelag 4 durch Aufbringen einer Betätigungskraft mit der Betätigungseinrichtung in Löserichtung verschoben werden, eine Erhöhung der Bremskraft erfolgt kraft- und energielos.

Eine Federkraft des Federelements 22 ist so klein, dass der bewegliche Reibbremsbelag 4 mit nur niedriger Andruckkraft an der Bremsscheibe 5 anliegt, die eine vernachlässigbare Bremskraft erzeugt. Ein mit der Scheibenbremse 1 ausgerüstetes Fahrzeug kann bei Ausfall der Scheibenbremse 1 benutzt werden, auch wenn der bewegliche Reibbremsbelag 4 vom Federelement 22 gegen die Bremsscheibe 5 gedrückt wird.

## Patentansprüche

1. Selbstverstärkende elektromechanische Reibungsbremse, mit einem Reibbremsbelag (4), der zur Betätigung der Reibungsbremse (1) mit einer Betätigungseinrichtung (12, 13) gegen einen zu bremsenden Bremskörper (5) drückbar ist, mit einer Selbstverstärkungseinrichtung (10), die eine vom drehenden Bremskörper (5) auf den beim Bremsen gegen ihn gedrückten Reibbremsbelag (4) ausgeübte Reibungskraft in eine Andruckkraft wandelt, die den Reibbremsbelag (4) zusätzlich zu einer von der Betätigungseinrichtung (12, 13) aufgebrachten Andruckkraft gegen den Bremskörper (5) drückt, **dadurch gekennzeichnet, dass** die Reibungsbremse (1) eine lösbare Abstützung (17) für den Reibbremsbelag (4) aufweist, die in nicht gelöstem Zustand den Reibbremsbelag (4) gegen eine Reaktionskraft zur Andruckkraft abstützt und die nach einem Lösen nachgibt.

2. Elektromechanische selbstverstärkende Reibungsbremse nach Anspruch 1, **dadurch gekennzeichnet, dass** die Abstützung (17) selbsttätig lösend ist.

3. Elektromechanische selbstverstärkende Reibungsbremse nach Anspruch 1, **dadurch gekennzeichnet, dass** die Abstützung (17) in verschiedenen Abständen vom Bremskörper (5) feststellbar.ist.

4. Elektromechanische selbstverstärkende Reibungsbremse nach Anspruch 1, **dadurch gekennzeichnet, dass** sich die Abstützung (17) in gelöstem Zurstand selbsttätig zustellt.

5. Elektromechanische selbstverstärkende Reibungsbremse nach Anspruch 1, **dadurch gekennzeichnet, dass** die Selbstverstärkungseinrichtung (17) für eine Polstelle eines Bremsenkennwerts C* ausgelegt ist.

6. Elektromechanische selbstverstärkende Reibungsbremse nach Anspruch 1, **dadurch gekennzeichnet, dass** die Reibungsbremse (1) einen negativen Bremsenkennwert C* aufweist.

7. Elektromechanische selbstverstärkende Reibungsbremse nach Anspruch 1, **dadurch gekennzeichnet, dass** die Selbstverstärkungseinrichtung (10) in beiden Drehrichtungen des Bremskörpers (5) wirksam ist.

8. Elektromechanische selbstverstärkende Reibungsbremse nach Anspruch 1, **dadurch gekennzeichnet, dass** die Reibungsbremse eine Scheibenbremse (1) ist.

9. Elektromechanische selbstverstärkende Reibungsbremse nach Anspruch 1, **dadurch gekennzeichnet, dass** die Selbstverstärkungseinrichtung (10) einen Rampenmechanismus (6, 7, 8, 9) aufweist.

10. Elektromechanische selbstverstärkende Reibungsbremse nach Anspruch 1, **dadurch gekennzeichnet, dass** die Abstützung (17) redundant lösbar ist.

11. Elektromechanische selbstverstärkende Reibungsbremse nach Anspruch 4, **dadurch gekennzeichnet, dass** zur Einstellung eines Lüftspiels zwischen dem Reibbremsbelag (4) und dem Bremskörper (5) der Reibbremsbelag (4) mit der Betätigungseinrichtung (12, 13) um einen dem gewünschten Lüftspiel entsprechenden Weg verschoben, die Abstützung (17) gelöst und nach Anlage des Reibbremsbelags (4) am Bremskörper (5) festgestellt und der Reibbremsbelag (4) anschließend mit der Betätigungseinrichtung (12, 13) in seine Ausgangsstellung zurückverschoben wird.

## Claims

1. Self-energizing electromechanical friction brake, having a friction brake lining (4) which, in order to actuate the friction brake (1), can be pressed by way of an actuating device (12, 13) against a brake body (5) to be braked, having a self-energizing device (10) which converts a friction force which is exerted by the rotating brake body (5) on the friction brake lining (4) which is pressed against it during braking into a pressing force which, in addition to a pressing force which is applied by the actuating device (12, 13), presses the friction brake lining (4) against the brake body (5), **characterized in that** the friction brake (1) has a releasable support (17) for the friction brake lining (4), which support (17), in the unreleased state, supports the friction brake lining (4) against a reaction force to the pressing force and yields after being released.

2. Electromagnetic self-energizing friction brake according to Claim 1, **characterized in that** the support (17) releases automatically.

3. Electromechanical self-energizing friction brake according to Claim 1, **characterized in that** the support (17) can be fixed at different spacings from the brake body (5).

4. Electromechanical self-energizing friction brake according to Claim 1, **characterized in that** the support (17) is applied automatically in the released state.

5. Electromechanical self-energizing friction brake according to Claim 1, **characterized in that** the self-energizing device (17) is designed for a pole of a brake characteristic value C*.

6. Electromechanical self-energizing friction brake according to Claim 1, **characterized in that** the friction brake (1) has a negative brake characteristic value C*.

7. Electromechanical self-energizing friction brake according to Claim 1, **characterized in that** the self-energizing device (10) is active in both rotational directions of the brake body (5).

8. Electromechanical self-energizing friction brake according to Claim 1, **characterized in that** the friction brake is a disc brake (1).

9. Electromechanical self-energizing friction brake according to Claim 1, **characterized in that** the self-energizing device (10) has a ramp mechanism (6, 7, 8, 9).

10. Electromechanical self-energizing friction brake according to Claim 1, **characterized in that** the support (17) is redundantly releasable.

11. Electromechanical self-energizing friction brake according to Claim 4, **characterized in that**, in order to set an air play between the friction brake lining (4) and the brake body (5), the friction brake lining (4) is displaced by way of the actuating device (12, 13) by a travel which corresponds to the desired air play, the support (17) is released and is fixed after contact of the friction brake lining (4) with the brake body (5), and the friction brake lining (4) is subsequently displaced back into its initial position by way of the actuating device (12, 13).

## Revendications

1. Frein électromécanique à friction et à auto-amplification, comprenant une garniture de frein à friction (4) qui peut être pressée contre un corps de frein (5) à freiner par actionnement du frein à friction (1) au moyen d'un dispositif d'actionnement (12, 13), avec un dispositif d'auto-amplification (10), qui convertit une force de friction exercée par le corps de frein rotatif (5) sur la garniture de frein à friction (4) pressée contre lui lors du freinage en une force de pression, qui presse la garniture de frein à friction (4) en plus d'une force de pression appliquée par le dispositif d'actionnement (12, 13) contre le corps de frein (5), **caractérisé en ce que** le frein à friction (1) présente un support amovible (17) pour la garniture de frein à friction (4), qui, dans l'état non desserré, supporte la garniture de frein à friction (4) contre une force de réaction à la force de pression et qui cède après un desserrage.

2. Frein électromécanique à friction et à auto-amplification selon la revendication 1, **caractérisé en ce que** le support (17) se desserre automatiquement.

3. Frein électromécanique à friction et à auto-amplification selon la revendication 1, **caractérisé en ce que** le support (17) peut être fixé à des distances différentes du corps de frein (5).

4. Frein électromécanique à friction et à auto-amplification selon la revendication 1, **caractérisé en ce que** le support (17) se met automatiquement dans l'état desserré.

5. Frein électromécanique à friction et à auto-amplification selon la revendication 1, **caractérisé en ce que** le dispositif d'auto-amplification (10) est conçu pour un pôle d'une caractéristique de freinage C*.

6. Frein électromécanique à friction et à auto-amplification selon la revendication 1, **caractérisé en ce que** le frein à friction (1) présente une caractéristique de freinage C* négative.

7. Frein électromécanique à friction et à auto-amplification selon la revendication 1, **caractérisé en ce que** le dispositif d'auto-amplification (10) agit dans les deux sens de rotation du corps de frein (5).

8. Frein électromécanique à friction et à auto-amplification selon la revendication 1, **caractérisé en ce que** le frein à friction est un frein à disques (1).

9. Frein électromécanique à friction et à auto-amplification selon la revendication 1, **caractérisé en ce que** le dispositif d'auto-amplification (10) présente un mécanisme de rampe (6, 7, 8, 9).

10. Frein électromécanique à friction et à auto-amplification selon la revendication 1, **caractérisé en ce que** le support (17) est desserrable de manière redondante.

11. Frein électromécanique à friction et à auto-amplification selon la revendication 4, **caractérisé en ce que** pour l'ajustement d'un jeu entre la garniture de frein à friction (4) et le corps de frein (5), la garniture de frein à friction (4) est décalée au moyen du dispositif d'actionnement (12, 13) d'une distance correspondant au jeu souhaité, le support (17) est desserré et est fixé après l'application de la garniture de frein à friction (4) sur le corps de frein (5) et la garniture de frein à friction (4) est ensuite ramenée dans sa position initiale au moyen du dispositif d'actionnement (12, 13).
